# FASCICULE DE BREVET EUROPEEN

(11) **EP 3 563 950 B1**
(45) Date de publication et mention de la délivrance du brevet: **01.11.2023**
(21) Numéro de dépôt: 18170805.8
(22) Date de dépôt: 04.05.2018
(51) Int. Cl.: B22F 3/22, C04B 35/48, C04B 35/56, C04B 35/584, C04B 35/634, C08L 23/08

(54) **LIANT POUR COMPOSITION DE MOULAGE PAR INJECTION**
BINDEMITTEL FÜR SPRITZGUSSZUSAMMENSETZUNG
BINDER FOR INJECTION-MOULDING COMPOSITION

(43) Date de publication de la demande: 06.11.2019
(73) Titulaire: Comadur S.A., 2400 Le Locle (CH)
(72) Inventeur: Cartier, Damien, 25000 Besançon (FR); Dumain, Jonathan, 25000 Besançon (FR)
(74) Mandataire: ICB SA

(56) Documents cités:
- EP-A2- 1 765 121
- EP-B1- 1 765 121
- WO-A1-2014/191304
- CH-A2- 708 097
- CH-B1- 707 572
- CH-B1- 709 100

## Description

### Domaine de l'invention

L'invention concerne une composition de liant pour moulage par injection ainsi qu'une composition de moulage par injection (feedstock) destinée à la fabrication de pièces de forme métalliques ou céramiques.

### Arrière-plan de l'invention

Dans la fabrication de matériaux durs pour la bijouterie et l'industrie horlogère, ou encore pour des applications techniques telles que le médical, l'électronique, la téléphonie, l'outillage, les plaquettes de coupe d'usinage, l'industrie des biens de consommation, et notamment en ce qui concerne des matériaux durs généralement désignés sous le nom générique de « céramiques » inorganiques, on met en oeuvre des techniques de métallurgie des poudres. On appellera ici «céramique» le matériau de synthèse inorganique obtenu, quelle que soit la nature de ce matériau, saphir, rubis, diamant artificiel, verre de saphir, céramique, micro-aimant, métal, alliage, ou autre.

Les matières premières de base sont de différente nature, de façon générale, et comportent au moins d'une part de la poudre de céramique et d'autre part des liants organiques, tels que résines ou matières plastiques ou similaires qui permettent l'injection et la bonne tenue du composant réalisé avec le mélange de l'ensemble des matières premières. D'autres additifs peuvent être incorporés au mélange. Ces matières premières peuvent également être de différentes textures: solide, pulvérulente, liquide, ou encore pâteuse. Le mélange peut en outre changer de structure au cours de son élaboration, en particulier, et non limitativement, quand des composants complémentaires d'une résine subissent une réaction de polymérisation.

Le procédé global de fabrication d'un composant céramique inorganique comporte au moins les étapes suivantes :
- préparation des matières premières ;
- mélange(s) des matières premières, ou/et pré-mélange deux à deux (ou plus) si nécessaire ;
- malaxage d'homogénéisation ;
- granulation ;
- pressage, notamment dans une chambre de moulage, d'une quantité de poudre ou de granulés feedstock issue du malaxage et de la granulation, pour la réalisation d'une ébauche de composant, appelée pièce verte. Ce pressage peut être réalisé par injection, sous pression, notamment dans un injecteur à vis comportant des moyens de mise en température de cette quantité de poudre ou de granulés feedstock issue du malaxage et de la granulation;
- étuvage de déliantage pour la combustion (déliantage thermique) ou/et la dissolution de certains composants du mélange dans un solvant approprié (déliantage solvant) ;
- traitement thermique de l'ébauche en sortie de déliantage, pour un déliantage thermique secondaire et pour le frittage donnant sa cohérence finale au composant fini. Ce traitement thermique entraîne un retrait dimensionnel, qui permet l'obtention d'un composant en cotes finies ;
- traitement de finition d'aspect du composant.

L'invention vise plus particulièrement à proposer un liant pour composition de moulage par injection optimisé facilitant le malaxage en métallurgie des poudres pour l'obtention de céramiques ou de métaux, de façon à obtenir une production de qualité très reproductible, avec un coefficient de retrait maîtrisé.

On connaît déjà par exemple les demandes WO 2014/191304, CH 708 097, CH 707 572, CH 709 100 de la demanderesse qui décrivent une composition de moulage par injection (feedstock) pour la fabrication de pièces moulées céramiques ou métalliques qui contient une poudre inorganique frittable et un liant organique, celui-ci étant essentiellement constitué d'un mélange de copolymère d'éthylène et d'acide méthacrylique, de polyéthylène, de polypropylène, de résines acryliques, et de cires.

Ces feedstocks présentent de nombreux avantages. Ils présentent plus particulièrement une bonne homogénéité et une bonne fluidité permettant la fabrication de pièces métalliques ou céramiques de formes plus complexes. Ils permettent également d'augmenter la résistance mécanique des corps verts et déliantés aux contraintes de production (manipulation et diverses opérations de reprise), ainsi que d'effectuer un déliantage solvant, pour éliminer une partie du liant organique, utilisant un solvant non polluant pouvant être éliminé par simple traitement thermique.

### Résumé de l'invention

Le but de la présente invention est de pallier les inconvénients cités précédemment en proposant de nouveaux feedstocks permettant notamment d'améliorer encore la viscosité de la composition injectée, d'obtenir un déliantage solvant plus efficace et d'obtenir des composants de meilleure qualité esthétique.

A cet effet, l'invention a pour objet un liant pour composition de moulage par injection comprenant :
- de 40 à 55% vol. d'une base polymérique,
- de 35 à 45 % vol. d'un mélange de cires ou un mélange de cire et d'huile de palme,
- et au moins 5% vol. d'au moins un surfactant,
dans lequel la base polymérique est constituée de copolymères d'éthylène et d'acide méthacrylique ou acrylique, de copolymères d'éthylène et de propylène et/ou de polypropylène greffé anhydride maléique, et de polymères solubles dans un solvant choisi parmi le groupe comprenant l'alcool isopropylique, l'alcool propylique, l'essence de térébenthine, et leurs mélanges, et choisis parmi le groupe comprenant un acétobutyrate de cellulose, un poly(butyral de vinyle) et un copolyamide, les quantités respectives des composants du liant étant telles que leur somme est égale à 100% en volume du liant.

La présente invention concerne également une composition de moulage par injection (feedstock) destinée à la fabrication de pièces de forme métalliques ou céramiques comprenant 76 à 96% pds. d'une poudre inorganique et 4 à 24% pds. du liant tel que défini ci-dessus.

La composition de moulage par injection selon l'invention permet d'améliorer la viscosité de la composition injectée, d'obtenir un déliantage solvant plus efficace et d'obtenir des composants de meilleure qualité esthétique.

### Description détaillée des modes de réalisation préférés

Conformément à l'invention, le liant pour composition de moulage par injection comprend les composants suivants :
- de 40 à 55% vol., de préférence 45 à 54% vol., d'une base polymérique,
- de 35 à 45% vol., de préférence 39 à 42% vol., d'un mélange de cires ou un mélange de cire et d'huile de palme,
- et au moins 5% vol., de préférence 5 à 15% vol., d'au moins un surfactant,
dans lequel la base polymérique est constituée de copolymères d'éthylène et d'acide méthacrylique ou acrylique, de copolymères d'éthylène et de propylène et/ou de polypropylène greffé anhydride maléique, et de polymères solubles dans l'alcool isopropylique et/ou l'alcool propylique et/ou l'essence de térébenthine, et choisis parmi le groupe comprenant un acétobutyrate de cellulose, un poly(butyral de vinyle) et un copolyamide, les quantités respectives des composants du liant étant telles que leur somme est égale à 100% en volume du liant.

De préférence, la base polymérique du liant de l'invention comprend de 2 à 7 % vol. de copolymères d'éthylène et d'acide méthacrylique ou acrylique, de 0 à 40% vol. de copolymères d'éthylène et de propylène, de 0 à 35 % vol. de polypropylène greffé anhydride maléique, la quantité globale de copolymère d'éthylène et de propylène et de polypropylène greffé anhydride maléique étant comprise entre 30% et 40% vol., et de 6 à 15% vol. de polymère soluble dans l'alcool isopropylique et/ou l'alcool propylique et/ou l'essence de térébenthine, par rapport à 100% en volume de liant, les quantités respectives des composants du liant étant telles que leur somme est égale à 100% en volume du liant.

De préférence, la base polymérique comprend un mélange de copolymères d'éthylène et de propylène et de polypropylène greffé anhydride maléique.

De préférence, la base polymérique du liant de l'invention comprend de 2 à 7 % vol. de copolymères d'éthylène et d'acide méthacrylique ou acrylique, de 25 à 30% vol. de copolymères d'éthylène et de propylène, de 5 à 10 % vol. de polypropylène greffé anhydride maléique et de 6 à 15% vol. de polymère soluble dans l'alcool isopropylique et/ou l'alcool propylique et/ou l'essence de térébenthine, par rapport à 100% en volume de liant.

Plus préférentiellement, la base polymérique du liant de l'invention comprend de 3 à 5% vol. de copolymères d'éthylène et d'acide méthacrylique ou acrylique, de 26 à 29% vol. de copolymères d'éthylène et de propylène, de 6 à 8% vol. de polypropylène greffé anhydride maléique et de 6 à 12% vol. de polymère soluble dans l'alcool isopropylique et/ou l'alcool propylique et/ou l'essence de térébenthine, par rapport à 100% en volume de liant.

De préférence, le copolymère d'éthylène et de propylène est un copolymère statistique (random) d'éthylène et de propylène ayant un point de fusion compris entre 140°C et 150°C, ce point de fusion variant selon le pourcentage d'éthylène et de propylène dans ledit copolymère. Par exemple, pour les poudres d'oxyde et de nitrure, le copolymère statistique d'éthylène et de propylène contient de préférence plus de propylène afin d'avoir un point de fusion d'environ 147°C. Pour les poudres métalliques, le copolymère statistique d'éthylène et de propylène contient de préférence plus d'éthylène afin d'avoir un point de fusion d'environ 140°C.

De préférence, le copolymère d'éthylène et d'acide méthacrylique ou acrylique contient de 3 à 10 % pds. de comonomère méthacrylique ou acrylique.

De préférence, le polypropylène greffé anhydride maléique a un taux de greffage compris entre 1% et 2% et un point de fusion compris entre 100°C et 140°C.

De préférence, le polymère soluble dans l'alcool isopropylique et/ou l'alcool propylique et/ou l'essence de térébenthine est un acétobutyrate de cellulose présentant une teneur en butyryle comprise entre 37% et 53% pds., une teneur en acétyle comprise entre 2% et 13% pds. par rapport au poids du polymère, un point de fusion compris entre 125°C et 165°C et un poids moléculaire compris entre 16000 et 40000.

De manière avantageuse, la cire est une cire de Carnauba ou une cire de paraffine ou un mélange de ces éléments. Lorsque la cire est en mélange avec l'huile de palme, la cire est de préférence une cire de Carnauba.

Selon une autre caractéristique préférée, le surfactant est un NN'-éthylène-bis(stéaramide) ou un mélange d'acides stéarique et palmitique (stéarine), ou un mélange de ces éléments.

Selon une autre caractéristique, le surfactant est soluble dans l'alcool isopropylique et/ou l'alcool propylique et/ou l'essence de térébenthine.

L'invention a également pour objet une composition de moulage par injection (feedstock) destinée à la fabrication de pièces de forme métalliques ou céramiques comprenant 76 à 96 % pds. d'une poudre inorganique et 4 à 24 % pds. du liant tel que défini ci-dessus.

Selon une caractéristique particulière, la poudre inorganique de la composition de moulage par injection peut être choisie parmi l'ensemble comprenant une poudre d'oxyde, de nitrure, de carbure, de métal, ou un mélange de ces dites poudres et de préférence la poudre inorganique est choisie parmi l'ensemble comprenant une poudre d'alumine, une poudre d'oxyde de zirconium, une poudre de carbure de chrome, une poudre de carbure de titane ou une poudre de carbure de tungstène, une poudre de tungstène métallique ou de nitrure de silicium, une poudre d'acier inoxydable, une poudre de titane métallique ou une mélanges de ces poudres.

Selon des modes de réalisation préférés de la composition de moulage par injection, cette dernière contient en % poids
- 76 à 88 % d'alumine et 12 à 24% de liant selon l'invention tel que défini plus haut, ou
- 76 à 88% d'alumine et 0.1 à 0.6% d'oxyde de magnésium et 12 à 24% de liant de l'invention, ou
- 58 à 86.5 % d'oxyde zirconium et 3.9 à 4.6% d'oxyde d'yttrium et 0.18 à 18.5% d'alumine et 9 à 22% de liant de l'invention, ou
- 61.5 à 84% d'oxyde de zirconium et 3.9 à 4.6% d'oxyde d'yttrium et 0.2 à 9% d'alumine et 2 à 5.5% de pigments inorganique d'une liste comprenant de l'oxyde de fer, de l'oxyde de cobalt, de l'oxyde de chrome, de l'oxyde de titane, de l'oxyde de manganèse, de l'oxyde de zinc ou d'un mélange des dits oxydes et de 9 à 22% de liant de l'invention, ou
- de 88 à 91 % de carbure de chrome ou de titane, et de 9 à 12% de liant de l'invention, ou
- de 93 à 96 % de carbure de tungstène ou de tungstène métallique et de 4 à 7% de liant de l'invention, ou
- de 78 à 85% de nitrure de silicium et de 15 à 22% de liant de l'invention.

La composition de moulage par injection (feedstock) destinée à la fabrication de pièces de forme métalliques ou céramiques selon l'invention présente une viscosité plus faible que les feedstocks connus, pour des taux de cisaillement équivalents. De ce fait, la composition de l'invention permet lors de l'injection, de mieux remplir les pièces, notamment dans les zones à parois fines. De plus, la composition selon l'invention permet un déliantage solvant des pièces plus efficace, notamment grâce à une meilleure perte des composés du liant dans le solvant alcool isopropylique et/ou alcool propylique et/ou essence de térébenthine. L'alcool propylique, avec un point d'ébullition de 97°C permet de délianter à plus haute température pour plus d'efficacité, grâce notamment à une meilleure élimination de la cire de Carnauba (point de fusion de 82°C).

La composition de l'invention permet également d'obtenir des pièces moulées et frittées présentant un aspect de surface amélioré, sans craquelures apparentes ni lignes de soudure de matière.

La présente invention sera maintenant illustrée plus en détails par les exemples non limitatifs qui suivent.

### Exemples

On mélange la partie polymérique du liant à une poudre inorganique à une température d'environ 150°C pour former un prémix. A ce prémix sont ajoutés les cires et le surfactant, et la température est à nouveau augmentée jusqu'à environ 180 °C pour former une sorte de pâte homogène, laquelle est alors refroidie puis granulée jusqu'à solidification, puis conservée pour constituer le feedstock utilisable dans la fabrication d'une pièce de forme par injection selon une technique connue.

Cette technique comprend typiquement une opération de moulage par injection à chaud sous pression dans un moule avec cavités. La pièce est refroidie dans la cavité puis est éjectée du moule. L'ensemble du processus se produit à environ 170°C-180°C. La pièce verte est ensuite déliantée dans de l'alcool isopropylique avant d'être frittée. Par le déliantage on élimine une partie du liant organique de la pièce pour ne laisser que suffisamment de liant pour maintenir la cohésion, ou en d'autres termes la forme moulée de la pièce verte. Le liant est typiquement extrait de la pièce verte par chauffage du solvant dans lequel la pièce est immergée. Lors de cette opération au moins 40% des composés du liant doivent se dissoudre. Avec le liant de l'invention, la pièce verte est typiquement plongée dans le solvant alcool isopropylique et chauffée à une température de l'ordre de 70°C. A cette température, le mélange de cires et ou le mélange de cire et d'huile se décompose thermiquement alors que les surfactants et les polymères solubles dans l'alcool isopropylique sont dissous chimiquement. Une fois l'opération de déliantage solvant terminée, la pièce est poreuse. La pièce est ensuite placée dans un four haute température pour dans un premier temps éliminer le liant restant (déliantage thermique, typiquement à une température inférieure à 400°C), cette opération étant facilitée par la porosité laissée dans la pièce lors du déliantage solvant, puis dans un deuxième temps fritter la pièce à haute température.

On réalise des pièces selon le procédé décrit ci-dessus à partir de différents liants de l'invention selon les compositions indiquées dans le tableau I ci-dessous, en fonction de la nature de la poudre inorganique :

**Tableau I**

| **Composants** | Exemple 1 (% Volumique/100% du liant) Oxydes (Zircone, Alumine, etc.) | Exemple 2 (% Volumique/100% du liant) Nitrures (Si₃N₄, TiN, etc.) | Exemple 3 (% Volumique/100% du liant) Carbures, cermets et métaux (TiC, WC, W, Acier, etc.) |
|---|---|---|---|
| Copolymère Ethylène Propylène (Polypropylène Random Copolymère) | 28.5 | 28 | 27 |
| Copolymères d'éthylène et d'acide méthacrylique | 4.5 | 4.5 | 4.5 |
| Polypropylène greffé anhydride maléique | 7 | 7 | 7 |
| Acétobutyrate de cellulose | 10.5 | 6.5 | 10.5 |
| Cire de Carnauba | 10.5 | 10 | 10 |
| Cire de Paraffine | 31 | 30 | 29 |
| NN' Etylène Bis Stéaramide | 8 | 10 | 14 |
| Stéarine | | 4 | |
| % Massique de poudre | ZrO₂ : 86% | Si₃N₄ : 78% | TiC : 89% |

Les composants sont disponibles commercialement. Le copolymère Ethylène Propylène (Polypropylène Random Copolymer) est du PPR 10232 distribué par Total Refining & Chemicals. Le polypropylène greffé anhydride maléique est du Fusabond^{®} P353 distribué par DuPont^{™}. L'acétobutyrate de cellulose est du CAB-551-0.01 distribué par Eastman^{™}.

Une composition a été réalisée selon l'exemple 1 ci-dessus avec, comme poudre inorganique, de la zircone ZrO₂ noire poudre St Gobain Zir Black. La viscosité de cette composition a été mesurée au rhéomètre capillaire Instron Ceast SR20 avec filière Ø1 mm longueur 20 mm.

A titre comparatif, on a mesuré la viscosité de la composition du feedstock décrit dans l'exemple 1 de la demande WO 2014/191304 avec la même poudre inorganique de zircone ZrO₂ noire poudre St Gobain Zir Black.
Les résultats sont indiqués dans le tableau II ci-dessous :

**Tableau II**

| Taux de cisaillement (1/s) | Viscosité Exemple ZrO₂ noire poudre St Gobain Zir Black selon exemple 1 de WO 2014/191304 (Pa.s) à 172°C fàM | Viscosité Exemple ZrO₂ noire poudre St Gobain Zir Black selon l'exemple 1 de l'invention (Pa.s) à 172°C ØM |
|---|---|---|
| | Poudre : 86.05% | Poudre : 86.05% |
| 10 | 8000 | 4300 |
| 100 | 1300 | 500 |
| 1000 | 120 | 75 |

La composition de moulage par injection selon l'invention présente une viscosité plus faible que les feedstocks connus, pour des taux de cisaillement équivalents.

De plus, les pertes de liants lors du déliantage dans le solvant alcool isopropylique sont améliorées : environ 45% de liant décrit dans la demande WO 2014/191304 étaient perdus dans le solvant alors qu'au moins 50% de liant selon l'invention sont perdus, notamment l'acétobutyrate de cellulose. Dans le cas des poudres métalliques, le pourcentage de perte peut aller jusqu'à 65%.

Les pièces moulées et frittées obtenues présentent un aspect de surface amélioré, sans craquelures apparentes ni lignes de soudure de matière.

## Revendications

1. Liant pour composition de moulage par injection comprenant comme composants:
- de 40 à 55% vol. d'une base polymérique,
- de 35 à 45 % vol. d'un mélange de cires ou un mélange de cire et d'huile de palme,
- et au moins 5% vol. d'au moins un surfactant,
dans lequel la base polymérique est constituée de copolymères d'éthylène et d'acide méthacrylique ou acrylique, de copolymères d'éthylène et de propylène et/ou de polypropylène greffé anhydride maléique, et de polymères solubles dans un solvant choisi parmi le groupe comprenant l'alcool isopropylique, l'alcool propylique, l'essence de térébenthine, et leurs mélanges, et choisis parmi le groupe comprenant un acétobutyrate de cellulose, un poly(butyral de vinyle) et un copolyamide, les quantités respectives des composants du liant étant telles que leur somme est égale à 100% en volume du liant.

2. Liant selon la revendication 1, **caractérisé en ce que** la base polymérique comprend de 2 à 7 % vol. de copolymères d'éthylène et d'acide méthacrylique ou acrylique, de 0 à 40% vol. de copolymères d'éthylène et de propylène, de 0 à 35 % vol. de polypropylène greffé anhydride maléique, la quantité de copolymère d'éthylène et de propylène et de polypropylène greffé anhydride maléique étant comprise entre 30% et 40% vol., et de 6 à 15% vol. de polymère soluble dans un solvant choisi parmi le groupe comprenant l'alcool isopropylique, l'alcool propylique, l'essence de térébenthine et leurs mélanges, par rapport à 100% en volume de liant, les quantités respectives des composants du liant étant telles que leur somme est égale à 100% en volume du liant.

3. Liant selon l'une des revendications précédentes, **caractérisé en ce que** la base polymérique comprend un mélange de copolymères d'éthylène et de propylène et de polypropylène greffé anhydride maléique.

4. Liant selon la revendication 3, **caractérisé en ce que** la base polymérique comprend de 2 à 7 % vol. de copolymères d'éthylène et d'acide méthacrylique ou acrylique, de 25 à 30% vol. de copolymères d'éthylène et de propylène, de 5 à 10 % vol. de polypropylène greffé anhydride maléique et de 6 à 15% vol. de polymère soluble dans un solvant choisi parmi le groupe comprenant l'alcool isopropylique, l'alcool propylique, l'essence de térébenthine et leurs mélanges, par rapport à 100% en volume de liant.

5. Liant selon l'une des revendications précédentes, **caractérisé en ce que** le copolymère d'éthylène et de propylène est un copolymère statistique (random) d'éthylène et de propylène ayant un point de fusion compris entre 140°C et 150°C.

6. Liant selon l'une des revendications précédentes, **caractérisé en ce que** le copolymère d'éthylène et d'acide méthacrylique ou acrylique contient de 3 à 10 % pds. de comonomère méthacrylique ou acrylique.

7. Liant selon l'une des revendications précédentes, **caractérisé en ce que** le polypropylène greffé anhydride maléique a un taux de greffage compris entre 1% et 2% et un point de fusion compris entre 100°C et 140°C.

8. Liant selon l'une des revendications précédentes, **caractérisé en ce que** le polymère soluble dans un solvant choisi parmi le groupe comprenant l'alcool isopropylique, l'alcool propylique, l'essence de térébenthine, et leurs mélanges, est un acétobutyrate de cellulose présentant une teneur en butyryle comprise entre 37% et 53% pds., une teneur en acétyle comprise entre 2% et 13% pds. par rapport au poids du polymère, un point de fusion compris entre 125°C et 165°C et un poids moléculaire compris entre 16000 et 40000.

9. Liant selon l'une des revendications précédentes, **caractérisé en ce que** la cire est une cire de Carnauba, une cire de paraffine, ou leurs mélanges.

10. Liant selon l'une des revendications précédentes, **caractérisé en ce que** la cire dans le mélange de cire et d'huile de palme est une cire de Carnauba.

11. Liant selon l'une des revendications précédentes, **caractérisé en ce que** le surfactant est un NN'-éthylène-bis(stéaramide), ou un mélange d'acides stéarique et palmitique (stéarine), ou un mélange de ces éléments.

12. Liant selon l'une des revendications précédentes, **caractérisé en ce que** le surfactant est soluble dans un solvant choisi parmi le groupe comprenant l'alcool isopropylique, l'alcool propylique, l'essence de térébenthine, et leurs mélanges.

13. Composition de moulage par injection (feedstock) destinée à la fabrication de pièces de forme métalliques ou céramiques comprenant 76 à 96% pds. d'une poudre inorganique et 4 à 24% pds. du liant selon l'une des revendications 1 à 12.

14. Composition de moulage selon la revendication 13, dans laquelle la poudre inorganique est choisie parmi le groupe comprenant une poudre d'oxyde, de nitrure, de carbure, de métal, ou un mélange de celles-ci.

15. Composition de moulage selon la revendication 14, dans laquelle la poudre inorganique est choisie parmi l'ensemble comprenant une poudre d'alumine, une poudre d'oxyde de zirconium, une poudre de carbure de chrome, une poudre de carbure de titane ou une poudre de carbure de tungstène, une poudre de tungstène métallique ou de nitrure de silicium, une poudre d'acier inoxydable, une poudre de titane métallique, ou un mélange de ces poudres.

16. Composition de moulage selon la revendication 15, qui contient en % poids :
• 76 à 88 % d'alumine et 12 à 24% de liant,
• 76 à 88% d'alumine et 0.1 à 0.6% d'oxyde de magnésium et 12 à 24% de liant,
• 58 à 86.5% d'oxyde zirconium et 3.9 à 4.6% d'oxyde d'yttrium et 0.18 à 18.5% d'alumine et 9 à 22% de liant,
• 61.5 à 84% d'oxyde de zirconium et 3.9 à 4.6% d'oxyde d'Yttrium et 0.2 à 9% d'alumine et 2 à 5.5% de pigments inorganique d'une liste comprenant de l'oxyde de fer, de l'oxyde de cobalt, de l'oxyde de chrome, de l'oxyde de titane, de l'oxyde de manganèse, de l'oxyde de zinc ou d'un mélange des dits oxydes et de 9 à 22% de liant,
• de 88 à 91% de carbure de chrome ou de titane et de 9 à 12% de liant,
• de 93 à 96% de carbure de tungstène ou de tungstène métallique et de 4 à 7% de liant, ou
• de 78 à 85% de Nitrure de silicium et de 15 à 22% de liant.

## Patentansprüche

1. Bindemittel für eine Spritzgusszusammensetzung, das als Komponenten umfasst:
- 40 bis 55 Vol.-% einer Polymerbasis,
- 35 bis 45 Vol.-% einer Wachsmischung oder einer Mischung aus Wachs und Palmöl,
- und mindestens 5 Vol.-% mindestens eines Tensids,
wobei die Polymerbasis aus Copolymeren von Ethylen und Methacryl- oder Acrylsäure, Copolymeren von Ethylen und Propylen und/oder Maleinsäureanhydrid-Pfropfpolypropylen und lösungsmittellöslichen Polymeren besteht, die aus der Gruppe ausgewählt sind, die aus Isopropylalkohol, Propylalkohol, Terpentinöl und Mischungen davon und ausgewählt aus der Gruppe bestehend aus Celluloseacetobutyrat, Polyvinylbutyral und Copolyamid, wobei die jeweiligen Mengen der Bindemittelkomponenten so sind, dass ihre Summe gleich 100 Vol.-% des Bindemittels ist.

2. Bindemittel nach Anspruch 1, **dadurch gekennzeichnet, dass** die Polymerbasis 2 bis 7 Vol.-% Copolymere von Ethylen und Methacryl- oder Acrylsäure, 0 bis 40 Vol.-% Copolymere von Ethylen und Propylen, 0 bis 35 Vol.-% Maleinsäureanhydrid-Pfropfpolypropylen umfasst, wobei die Menge an Ethylen-Propylen-Copolymer und Maleinsäureanhydrid-Pfropfpolypropylen zwischen 30 und 40 Vol.-%, und 6 bis 15 Vol.-% Polymer, das in einem Lösungsmittel aus der Gruppe Isopropylalkohol, Propylalkohol, Terpentinöl und deren Mischungen löslich ist, bezogen auf 100 Vol.-% Bindemittel, wobei die jeweiligen Mengen der Bindemittelkomponenten so sind, dass ihre Summe gleich 100 Vol.-% des Bindemittels ist.

3. Bindemittel nach einem der vorhergehenden Ansprüche, **dadurch gekennzeichnet, dass** die Polymerbasis eine Mischung aus Copolymeren von Ethylen und Propylen und Maleinsäureanhydridgepfropftem Polypropylen umfasst.

4. Bindemittel nach Anspruch 3, **dadurch gekennzeichnet, dass** die Polymerbasis 2 bis 7 Vol.-% Ethylen-Methacryl- oder Acrylsäure-Copolymere, 25 bis 30 Vol.-% Ethylen-Propylen-Copolymere, 5 bis 10 Vol.% Maleinsäureanhydrid-Pfropfpolypropylen und 6 bis 15 Vol.-% eines Polymers, das in einem Lösungsmittel aus der Gruppe Isopropylalkohol, Propylalkohol, Terpentinöl und deren Mischungen löslich ist, bezogen auf 100 Vol.-% Bindemittel.

5. Bindemittel nach einem der vorhergehenden Ansprüche, **dadurch gekennzeichnet, dass** das Ethylen-Propylen-Copolymer ein statistisches (Random-) Copolymer von Ethylen und Propylen mit einem Schmelzpunkt zwischen 140 °C und 150 °C ist.

6. Bindemittel nach einem der vorhergehenden Ansprüche, **dadurch gekennzeichnet, dass** das Copolymer aus Ethylen und Methacryl- oder Acrylsäure 3 bis 10 Gew.-% Methacryl- oder Acryl-Comonomer enthält.

7. Bindemittel nach einem der vorhergehenden Ansprüche, **dadurch gekennzeichnet, dass** das Maleinsäureanhydrid-Pfropfpolypropylen einen Pfropfungsgrad zwischen 1 % und 2 % und einen Schmelzpunkt zwischen 100 °C und 140 °C aufweist.

8. Bindemittel nach einem der vorhergehenden Ansprüche, **dadurch gekennzeichnet, dass** das lösungsmittellösliche Polymer aus der Gruppe Isopropylalkohol, Propylalkohol, Terpentinöl und deren Mischungen ein Celluloseacetobutyrat ist mit einem Butyrylgehalt zwischen 37 und 53 Gew,-%, einem Acetylgehalt zwischen 2 und 13 Gew.-%, bezogen auf das Gewicht des Polymers, einem Schmelzpunkt zwischen 125 °C und 165 °C und einem Molekulargewicht zwischen 16000 und 40000.

9. Bindemittel nach einem der vorhergehenden Ansprüche, **dadurch gekennzeichnet, dass** das Wachs ein Carnaubawachs, ein Paraffinwachs oder deren Mischungen ist.

10. Bindemittel nach einem der vorhergehenden Ansprüche, **dadurch gekennzeichnet, dass** das Wachs in der Mischung aus Wachs und Palmöl ein Carnaubawachs ist.

11. Bindemittel nach einem der vorhergehenden Ansprüche, **dadurch gekennzeichnet, dass** das Tensid ein NN'-Ethylen-bis(stearamid) oder ein Gemisch aus Stearin- und Palmitinsäure (Stearin) oder ein Gemisch davon ist.

12. Bindemittel nach einem der vorhergehenden Ansprüche, **dadurch gekennzeichnet, dass** das Tensid in einem Lösungsmittel löslich ist, das aus der Gruppe ausgewählt ist, die aus Isopropylalkohol, Propylalkohol, Terpentinöl und deren Gemischen besteht.

13. Spritzgussformmasse (Feedstock) zur Herstellung von metallischen oder keramischen Formteilen, umfassend 76 bis 96 Gew.-% eines anorganischen Pulvers und 4 bis 24 Gew.-% des Bindemittels nach einem der Ansprüche 1 bis 12.

14. Formmasse nach Anspruch 13, wobei das anorganische Pulver aus der Gruppe ausgewählt ist, die aus einem Oxid-, Nitrid-, Karbid-, Metallpulver oder einer Mischung davon besteht.

15. Formmasse nach Anspruch 14, wobei das anorganische Pulver aus der Gruppe ausgewählt ist, die aus Aluminiumoxidpulver, Zirkoniumoxidpulver, Chromkarbidpulver, Titankarbidpulver oder Wolframkarbidpulver, metallischem Wolframpulver oder Siliziumnitridpulver, Edelstahlpulver, metallischem Titanpulver oder einem Gemisch dieser Pulver besteht.

16. Formmasse nach Anspruch 15, die in Gew.-% enthält:
• 76 bis 88 % Aluminiumoxid und 12 bis24 % Bindemittel,
• 76 bis 88 % Aluminiumoxid und 0,1 bis 0,6 % Magnesiumoxid und 12 bis 24 % Bindemittel,
• 58 bis 86,5 % Zirkoniumoxid und 3,9 bis 4,6 % Yttriumoxid und 0,18 bis 18,5 % Aluminiumoxid und 9 bis 22 % Bindemittel,
• 61,5 bis 84 % Zirkoniumoxid und 3,9 bis 4,6 % Yttriumoxid und 0,2 bis 9 % Aluminiumoxid und 2 bis 5,5 % anorganische Pigmente aus einer Liste, die Eisenoxid, Kobaltoxid, Chromoxid, Titanoxid, Manganoxid, Zinkoxid oder eine Mischung aus diesen Oxiden umfasst, und 9 bis 22 % Bindemittel,
• von 88 bis 91 % Chrom- oder Titankarbid und 9 bis 12 % Bindemittel,
• 93 bis 96 % Wolframcarbid oder Wolframmetall und 4 bis 7 % Bindemittel, oder
• von 78 bis 85 % Siliziumnitrid und 15 bis 22 % Bindemittel.

## Claims

1. Binder for injection moulding composition including as components:
- from 40 to 55 volume percent of a polymeric base,
- from 35 to 45 volume percent of a mixture of waxes or a mixture of wax and palm oil,
- and at least 5 volume percent of at least one surfactant,
wherein the polymeric base is formed of copolymers of ethylene and methacrylic or acrylic acid, copolymers of ethylene and propylene and/or maleic anhydride-grafted polypropylene, and polymers soluble in solvents chosen from the group including isopropyl alcohol, propyl alcohol, turpentine, and mixtures thereof, and chosen from the group including a cellulose acetate butyrate, a polyvinyl butyral and a copolyamide, the respective quantities of the binder components being such that their sum is equal to 100 volume percent of the binder.

2. Binder according to claim 1, **characterized in that** the polymeric base includes from 2 to 7 volume percent of copolymers of ethylene and methacrylic or acrylic acid, 0 to 40 volume percent of copolymers of ethylene and propylene, 0 to 35 volume percent of maleic anhydride-grafted polypropylene, the quantity of copolymer of ethylene and propylene and maleic anhydride-grafted polypropylene being comprised between 30 and 40 volume percent, and from 6 to 15 volume percent of polymer soluble in a solvent chosen from the group including isopropyl alcohol, propyl alcohol, turpentine and mixtures thereof, to 100 volume percent of binder, the respective quantities of the binder components being such that their sum is equal to 100 volume percent of binder.

3. Binder according to any of the preceding claims, **characterized in that** the polymeric base includes a mixture of copolymers of ethylene and propylene and maleic anhydride-grafted polypropylene.

4. Binder according to claim 3, **characterized in that** the polymeric base includes from 2 to 7 volume percent of copolymers of ethylene and methacrylic or acrylic acid, 25 to 30 volume percent of copolymers of ethylene and propylene, from 5 to 10 volume percent of maleic anhydride-grafted polypropylene and from 6 to 15 volume percent of polymer soluble in a solvent chosen from the group including isopropyl alcohol, propyl alcohol, turpentine and mixtures thereof, to 100 volume percent of binder.

5. Binder according to any of the preceding claims, **characterized in that** the copolymer of ethylene and propylene is a random statistical copolymer of ethylene and propylene with a melting point of between 140°C and 150°C.

6. Binder according to any of the preceding claims, **characterized in that** the copolymer of ethylene and methacrylic or acrylic acid contains from 3 to 10 wt.% of methacrylic or acrylic comonomer.

7. Binder according to any of the preceding claims, **characterized in that** the maleic anhydride-grafted polypropylene has a grafting rate of between 1% and 2% and a melting point of between 100°C and 140°C.

8. Binder according to any of the preceding claims, **characterized in that** the polymer soluble in a solvent chosen from the group including isopropyl alcohol, propyl alcohol, turpentine and mixtures thereof, is a cellulose acetate butyrate having a butyryl content of between 37 wt.% and 53 wt.%, an acetyl content of between 2 wt.% and 13 wt.% to the weight of polymer, a melting point of between 125°C and 165°C and a molecular weight of between 16000 et 40000.

9. Binder according to any of the preceding claims, **characterized in that** the wax is a Carnauba wax, a paraffin wax, or mixtures thereof.

10. Binder according to any of the preceding claims, **characterized in that** the wax in the wax and palm oil mixture is a Carnauba wax.

11. Binder according to any of the preceding claims, **characterized in that** the surfactant is an NN'-ethylene bis(stearamide) or a mixture of stearic and palmitic acids (stearin), or a mixture of such elements.

12. Binder according to any of the preceding claims, **characterized in that** the surfactant is soluble in a solvent chosen from the group including isopropyl alcohol, propyl alcohol, turpentine, and mixtures thereof.

13. Injection moulding composition (feedstock) intended for fabrication of shaped metal or ceramic parts including 76 to 96 wt.% of an inorganic powder and 4 to 24 wt.% of the binder according to any of claims 1 to 12.

14. Moulding composition according to claim 13, wherein the inorganic powder is selected from the group including an oxide powder, nitride powder, carbide powder, metal powder or a mixture thereof.

15. Moulding composition according to claim 14, wherein the inorganic powder is selected from the group including an alumina powder, a zirconium oxide powder, a chromium carbide powder, a titanium carbide powder or a tungsten carbide powder, a metallic tungsten or silicon nitride powder, a stainless steel powder, a metallic titanium powder or a mixture of said powders.

16. Moulding composition according to claim 15, which contains in weight percentage:
• 76 to 88 % of alumina, and 12 to 24% of binder,
• 76 to 88% of alumina and 0.1 to 0.6% of magnesium oxide and 12 to 24% of binder,
• 58 to 86.5% of zirconium oxide and 3.9 to 4.6% of yttrium oxide and 0.18 to 18.5% of alumina and 9 to 22% of binder,
• 61.5 to 84% of zirconium oxide and 3.9 to 4.6% of yttrium oxide and 0.2 to 9% of alumina and 2 to 5.5% of inorganic pigments from a list including iron oxide, cobalt oxide, chromium oxide, titanium oxide, manganese oxide, zinc oxide or a mixture of said oxides and 9 to 22% of binder,
• 88 to 91% of chromium or titanium carbide, and 9 to 12% of binder,
• 93 to 96% of tungsten carbide or metallic tungsten and 4 to 7% of binder, or
• 78 to 85% of silicon nitride, and 15 to 22% of binder.
